# EUROPÄISCHE PATENTSCHRIFT

(11) **EP 2 141 508 B1**
(45) Veröffentlichungstag und Bekanntmachung des Hinweises auf die Patenterteilung: **22.12.2010**
(21) Anmeldenummer: 09173558.9
(22) Anmeldetag: 29.10.2004
(51) Int. Cl.: G01S 5/30

(54) **Ortungsanordnung, insbesondere Losboxen-Lokalisierungssystem, Kennzeicheneinheit und Verfahren zur Ortsbestimmung**
Locating arrangement, particularly loose-box localization system, identifying unit and method for determining location
Dispositif de localisation, notamment système de localisation de boites d'un lot, unité d'identification et procédé de localisation

(30) Priorität: 12.11.2003 DE 10352774
(43) Veröffentlichungstag der Anmeldung: 06.01.2010
(62) Teilanmeldung aus: 04818409.7
(73) Patentinhaber: UCTec Beteiligungsgesellschaft AG, 9016 St. Gallen (CH)
(72) Erfinder: Eisen, Stephan, 9434, Au SG (CH); Fischer, Hanspeter, 9523, Landskron (AT)
(74) Vertreter: Karl, Frank

(56) Entgegenhaltungen:
- WO-A-01/34264
- US-A- 4 247 922
- US-A- 5 491 670
- US-A- 5 748 106
- US-B1- 6 292 106
- US-B1- 6 348 908
- US-B1- 6 553 013

## Beschreibung

Die Erfindung betrifft eine Ortungsanordnung mit deren Hilfe sich die Lage mindestens einer Kennzeicheneinheit ermitteln lässt. Die Kennzeicheneinheit ist bspw. mit einem sogenannten Fertigungslos verbunden, das mehrere auf gleiche Art zu bearbeitende Werkstücke enthält, bspw. Halbleiterwafer. Ein Los enthält bspw. etwa 50 oder 25 Halbleiterwafer, d.h. zwei Horden oder eine Horde.

Aus der US 6,292,106 B1 sind ein akustisches System und ein Verfahren zum Lokalisieren und Verfolgen einer Mehrzahl von Personen in Räumen eines Gebäudes bekannt. Aus der US 5,748,106 sind ein Verfahren und ein Apparat zum Steuern von Transpondersignalen bekannt. Aus der US 6,348,908 B1 ist eine Anzeigeeinheit bekannt, die durch Umgebungsenergie gespeist wird.

Es ist Aufgabe eine zu ortende Kennzeicheneinheit anzugeben.

Die Aufgabe wird durch eine Kennzeicheneinheit mit den im Patentanspruch 1 angegebenen Merkmalen gelöst. Weiterbildungen sind in den Unteransprüchen angegeben.

Die Erfindung geht von der Überlegung aus, dass eine Ortung im Nahbereich mit elektromagnetischen Wellen, wie Funkwellen oder Licht bzw. Infrarotlicht, zwar technisch möglich aber schaltungstechnisch aufwändig ist, weil auf Grund der kurzen Signallaufzeiten zu große Anforderungen an die Verarbeitungszeiten der Schaltung auftreten. Geeigneter ist Ultraschall mit einer Ausbreitungsgeschwindigkeit in Luft mit Zimmertemperatur von etwa 340 m/s. Damit liegen Laufzeiten der Signale im Nahbereich bspw. unterhalb von 50 Millisekunden. Solche Laufzeiten lassen sich mit vertretbarem schaltungstechnischen Aufwand erfassen.

Die zugehörige Ortungsanordnung enthält deshalb mehrere Ultraschall-Sender, die entlang eines Weges aufgereiht sind, bspw. mindestens drei, sechs oder neun Ultraschall-Sender. Der Abstand zwischen benachbarten Ultraschallsendern der Reihe beträgt mehr als einen Meter. Durch diese Maßnahme lassen sich auch entlang eines Weges bis zu mehreren hundert Metern noch mit vertretbarem Aufwand Sender installieren. Für die eigentliche Messung werden immer nur die beiden nächstliegenden bzw. nur sehr wenige Sender in der Nachbarschaft des zu ortenden Objektes benötigt.

Die Ermittlungsmethode zum Ermitteln der Position ist besonderes einfach, wenn bei einer Weiterbildung die Sender entlang einer geraden Strecke mit untereinander gleichmäßigen Abständen zwischen einander benachbarten Sendern aufgereiht sind. Dann ist das Berechnungsverfahren insbesondere unabhängig vom Ort, d.h. für verschieden Orte immer gleich.

Bei einer Weiterbildung hat der Abstand einen Wert im Bereich von drei Meter bis zu einem Meter, insbesondere einen Wert von 1,6 Meter. Die genannten Werte sind ein besonders guter Kompromiss zwischen einer geringen Anzahl von Ultraschallsendern, hoher Ortsauflösung und kurzer Laufzeitermittlung.

Bei einer nächsten Weiterbildung sind die Sender entlang eines Ganges angeordnet, insbesondere entlang eines Ganges in einer Werkhalle. In der Werkhalle werden vorzugsweise Halbleiterwafer oder andere Substrate für integrierte elektronische Schaltungen bearbeitet.

Bei einer anderen Weiterbildung enthält die Ortungsanordnung eine Ansteuereinheit, die die Sender gemäß einer Pulsbetriebsart ansteuert, in der zwischen Sendepausen Ultraschallimpulse ausgesendet werden. Ultraschallimpulse eignen sich besonders gut zur Ortung.

Die Ansteuereinheit arbeitet bei einer nächsten Weiterbildung zyklisch, wobei für die Sender Ansteuersignale erzeugt werden, die das Aussenden von Ultraschallimpulsen veranlassen. Ein Zyklus enthält mindestens zwei Abschnitte, in denen jeweils ein anderer Teil der Sender angesteuert wird. Durch diese Maßnahme lassen sich die Laufzeiten von verschiedenen Sendern nacheinander ohne gegenseitige Störungen ermitteln. Die Anzahl der Abschnitte je Zyklus hängt von mehreren Parametern ab, bspw. der geforderten Wiederholrate, der Ortungsgenauigkeit, der für Kommunikation benötigten Zeit und von Hardwaregegebenheiten, bspw. werden 12 Ultraschallsender an eine Ansteuereinheit angeschlossen, so dass Vielfache von 12 bevorzugt gewählt werden. Eine geeignete Zyklenanzahl ist bspw. 36 Zyklen oder 48 Zyklen.

Bei einer nächsten Weiterbildung enthält die Ansteuereinheit vorzugsweise mehrere Gruppenansteuereinheiten, die jeweils abhängig von einem Eingangssignal die Ansteuersignale für mehrere Sender erzeugen. Dadurch lässt sich der Ansteueraufwand reduzieren.

Bei einer Weiterbildung sind mindestens drei weitere US-Sender entlang einer weiteren geraden Strecke mit untereinander gleichen Abständen zwischen zueinander benachbarten Sendern aufgereiht. Liegen die beiden Wege parallel zueinander, so lassen sich auf einfache Weise Orte in parallel liegenden Gängen erfassen. Aber auch eine flächenhafte Ortserfassung ist möglich, wobei die eine Koordinate entlang eines Weges liegt und die andere Koordinate davon abhängt, von welchem Weg aus geortet wird.

Bei einer Weiterbildung senden mindestens zwei Sender an verschiedenen Wegen gleichzeitig, so dass Beeinflussungen ausgeschlossen bzw. stark verringert sind. Dies lässt sich insbesondere erreichen, wenn zwischen den beiden gleichzeitig sendenden Sendern nach einer Parallelverschiebung eines Weges auf den anderen Weg mehr als ein Sender liegt oder mehr als drei Sender oder mehr als sechs Sender bezogen auf einen der beiden Wege liegen.

Bei einer nächsten Weiterbildung liegt zwischen den beiden Strecken ein Gebiet, in dass kein Ultraschallsignal der Sender oder nur ein stark gedämpftes Ultraschallsignal dringt. Das Gebiet ist bspw. ein weiterer Gang zwischen zwei Gängen, in denen geortet wird. So sind in Halbleiterfabriken Wartungsgänge zwischen Reinraumgängen angeordnet. In den Wartungsgängen werden keine Wafer geortet.

Bei einer Weiterbildung gibt es mindestens drei weitere US-Sender, die entlang einer geraden Haupt-Strecke mit untereinander gleichen Abständen zwischen zueinander benachbarten Sendern aufgereiht sind, wobei die Haupt-Strecke quer zu mindestens zwei Neben-Strecken liegt, insbesondere im Winkel von 90 Grad. Damit kann auch in einem die Quergänge verbindenden Hauptgang eine Ortung vorgenommen werden.

Bei einer Weiterbildung enthält die Ortungsanordnung mindestens drei Strahlungs-Empfänger, insbesondere Empfänger für elektromagnetische Strahlung, wie HF- (Hochfrequenz) bzw. Funkempfänger oder Infrarotempfänger, die entlang einer geraden Strecke mit zueinander gleichen Abständen zwischen einander benachbarten Strahlungs-Empfängern aufgereiht sind. Der Abstand zwischen benachbarten Empfängern ist mindestens doppelt so groß wie der Abstand zwischen benachbarten Sendern ist. Die Empfänger dienen bei einer Ausgestaltung der Kommunikation mit den zu ortenden Objekten. Die Kommunikation muss möglichst schnell erfolgen, so dass Ultraschall zu langsam wäre. Bei einer Ausgestaltung werden die Empfänger außerdem für eine Groblokalisierung genutzt, wobei an Stelle von Laufzeiten Empfangspegel ausgewertet werden. Damit ist auch bei der Groblokalisierung der schaltungstechnische Aufwand gering.

Bei einer Ausgestaltung liegt der Abstand zwischen den Empfängern im Bereich von drei Meter und bis sieben Meter. Damit lässt sich immer ein Empfänger ermitteln, dessen Empfangssignal bezüglich einer zu lokalisierenden Einheit erheblich größer als das der anderen Empfänger ist, so dass die Groblokalisierung einfach und sicher durchgeführt werden kann.

Sind bei einer Ausgestaltung die Empfänger auf den gleichen Strecken angeordnet wie die Sender, so ist der Montageaufwand gering. Wird ein Empfänger jeweils zwischen zwei Sendern angeordnet, vorzugsweise mit gleichen Abstand zu den beiden Sendern, so sind Abschattungen gering.

Bei einer Weiterbildung gibt es mehrere Anschlusseinheiten, an denen jeweils mehrere Antennenmodule betrieben werden, wobei ein Antennenmodul vorzugsweise eine Empfangsantenne und mehrere Sender enthält, bspw. drei Sender. Die Anschlusseinheiten sind bei einer Ausgestaltung über ein lokales Daten-übertragungsnetz verbunden, bspw. über ein Ethernet. Der modulare Aufbau ermöglich eine leicht Anpassung an verschiedene räumlich Gegebenheiten.

Bei einer nächsten Weiterbildung sind die Ultraschallsender und die RF-Antennen an einer Decke oder an Deckenquerverstrebungen befestigt.

Bei einer Weiterbildung enthält die Ortungsanordnung mindestens 1000 oder mindestens 1500 Kennzeicheneinheiten, die voneinander verschiedene Kennzeichen haben und die im Beschallungsbereich der Sender angeordnet sind. Bspw. gibt es in einer Werkhalle die genannte Anzahl von zu ortenden Aufnahmebehältern für mehrere Substrate für integrierte Schaltungen.

Die Erfindung betrifft außerdem eine Kennzeicheneinheit, die eine Speichereinheit enthält, in der ein Kennzeichen gespeichert ist, dass die Kennzeicheneinheit von anderen gleich aufgebauten Kennzeicheneinheiten unterscheidet. Die Kennzeichnungseinheit enthält außerdem einen Ultraschallempfänger, einen Strahlungssender, einen Strahlungsempfänger und eine Steuereinheit. Die Steuereinheit führt abhängig von einem mit dem Strahlungsempfänger empfangenen Synchronisationssignal eine Ultraschalllaufzeitmessung durch und sendet das Ergebnis mit Hilfe des Strahlungssenders nach außen.

Bei einer Ausgestaltung enthält die Kennzeicheneinheit eine stromsparende bistabile Zeichen-Anzeigeeinheit, die den darzustellenden Inhalt auch nach einem Abschalten der Betriebsspannung anzeigt. Alternativ oder zusätzlich enthält die Kennzeicheneinheit mindestens eine Leuchteinheit, die über den Strahlungsempfänger angesteuert werden kann, z.B. ein Leuchtdiode. Die Leuchteinheit kennzeichnet bspw. bevorzugt bzw. besonders eilig zu bearbeitende Fertigungseinheiten. Auch eine gerade gesuchte Kennzeicheneinheit lässt sich über die Leuchteinheit, insbesondere über eine blinkende Leuchteinheit, bereits aus mehreren Metern von anderen Kennzeichnungseinheiten unterscheiden, so dass die Suche erheblich erleichtert wird, selbst wenn der Ort ungefähr bekannt ist. Bspw. kann aus drei Kennzeichnungseinheiten im Umkreis von einem halben Meter leicht die gesuchte Kennzeichnungseinheit herausgegriffen werden. Die Suchanfrage wird bspw. über eine Ansteuereinheit eingegeben.

Ein zugehöriges Verfahren zur Ortsbestimmung enthält die folgenden Schritte:
- Aufbau einer Ortungsanordnung aus mehreren Ultraschallsendern entlang mindestens eines Weges,
- Aufbau mindestens zweier Strahlungsempfänger oder Strahlungssender, die jeweils Strahlung aus mindestens einem von einem Sender beschallten Bereich empfangen,
- Einbringen mindestens einer Kennzeicheneinheit in einen Bereich, der von mindestens zwei Sendern beschallt wird,
- Durchführen einer Ultraschalllaufzeitmessung von mindestens zwei Sendern bis zu der Kennzeicheneinheit und Ermitteln mindestens eines Laufzeitdatums,
- Ermitteln einer Feinposition der Kennzeicheneinheit abhängig vom Laufzeitdatum,
- Ermitteln einer Grobposition der Kennzeicheneinheit mit Hilfe mindestens zweier Strahlungssender oder Strahlungsempfänger,
- Verknüpfen der Feinposition und der Grobposition zu einem Ortsdatum.

Es entsteht ein leistungsfähiges Ortungsverfahren, das insbesondere für den Einsatz in Halbleiterfabriken geeignet ist.

Bei einer Weiterbildung des Verfahren werden die folgenden Schritte durchgeführt:
- Ermittlung der Feinposition durch trigonometrische Berechnungen in einer Ebene, die eine Strecke enthält, in der die Ultraschall-Sender aufgereiht sind und die die Kennzeicheneinheit enthält,
- Ermittlung einer Feinposition mit nur einer Ortskoordinate.

Im Vergleich zu einer nicht immer erforderlichen dreidimensionalen oder zweidimensionalen Ortung ist die so durchgeführte eindimensionale Ortung sehr genau und mit kleinem Aufwand durchführbar.

Ein zugehöriges Losboxen-Lokalisierungssystem enthält eine Ortungsanordnung, die zwischen mehreren Fertigungsanlagen die Transportwege für mehrere Losboxen flächendeckend erfasst und die Losboxen mit einer Genauigkeit kleiner als zwei Meter oder kleiner als ein Meter ortet. Insbesondere wird die erfindungsgemäße Ortungsanordnung oder eine ihrer Weiterbildungen in dem Losboxen-Lokalisierungssystem verwendet.

Bei einer Weiterbildung enthält das Losboxen-Lokalisierungssystem ein Kommunikationssystem mit dem Fertigungsdaten und/oder Transportdaten an Ausgabeeinheiten ausgegeben werden, die an den Losboxen befestigt sind.

Dadurch besteht die Möglichkeit, nicht nur während der Liegezeit der Losboxen, bspw. in einem Regal, Ortsinformationen zu sammeln und Informationen auszugeben, sondern den gesamten Prozess des Transportes dynamisch zu unterstützen. Das maßgeblich Prinzip hierfür ist das Linienkonzept der Antennen-und Senderinstallation, insbesondere in der Mitte entlang der Längsachse eines Ganges bzw. eines sogenannten Fingers. Durch dieses Prinzip kann die Antennedichte soweit reduziert werden, dass die geforderte Performance einer flächendeckenden Lokalisierung und einer ortsunabhängigen Kommunikation erreicht wird. Durch die geringe Antennendichte kann in einem zwischen den RF-Antennen (radio frequency), den Ultraschallsendern und den Kennzeicheneinheiten verwendeten synchronen Kommunikationsprotokoll, bei dem ein Zyklus in feste Zeitabschnitte unterteilt ist, eine Zeitersparnis von über 70 Prozent für die Feinlokalisierung über Ultraschall erreicht werden, so dass 70 Prozent der Zeit für Kommunikationsvorgänge über Funk verbleibt.

Es wird eine Lokalisierung einer Losbox entlang der Fingerlängsachse auf wenige Zentimeter genau möglich. Hingegen ist eine Positionsbestimmung bzgl. der Position in der Höhe und der Breite eines Ganges bzw. Fingers nicht möglich, d.h. einer dreidimensionalen Ortsangabe. Eine dreidimensionale Ortsangabe ist jedoch für die Leitfunktion beim Transport auch nicht erforderlich, da die genaue Lokalisierung einer Losbox, bspw. durch die Möglichkeit einer optischen Signalgebung in Form eines FlipDots oder einer blinkenden bzw. kontinuierlich leuchtenden LED bzw. Lampe an der Kennzeicheneinheit möglich ist.

Die entlang einer geometrischen Linie montierbaren Antennenmodule steigern somit maßgeblich die Performance des Gesamtsystems, sind einfach montierbar und sind weitgehend unabhängig von Regalumstellungen oder kleineren Umbauten der Produktionshalle.

Durch die Erfindung wird also das technische Problem der Planung, Steuerung, Optimierung und Überwachung des Transportprozesses bei einer flexiblen Produktion gelöst, insbesondere einer Waferproduktion. Die Waferboxen werden automatisch, z.B. mittels Transportband oder manuell transportiert, z.B. mittels Transportwagen. Bei einem kundenspezifisch ausgerichteten Produktionsprogramm ist der Einsatz vollautomatischer, starrer Transportsysteme auf Grund der mangelnden Flexibilität der Transportvorgänge und der hohen Investitionskosten oft nicht mit vertretbaren Aufwand durchzuführen. Diese Beschränkung wird nun überwunden, weil sowohl eine flächendeckende Lokalisierung als auch eine geeignete Ausgabe von Transportleit- und Fertigungsinformationen je Losbox zu einem beliebigen Zeitpunkt im Transportprozess durchgeführt wird, so dass steuernde Eingriffe von Bedienpersonen jederzeit möglich sind. Dies Möglichkeit wird auch als papierlose Fabrik bezeichnet. So lässt sich bspw. unkompliziert ein Eillos durch die Fertigung transportieren.

Durch die Erfindung wird insbesondere ein integriertes Transportleit- und Fertigungsinformationssystem angegeben, das sowohl die Wegvorgabe für den manuellen Transport auf der Basis einer Feinlokalisierung der Losboxen per Funk- und Ultraschalltechnologie in der gesamten Produktionshalle sowie die Informations- und Leitwegausgabe zur effizienten Zustellung bzw. zum effizienten Transport der Losbox zur nächsten Fertigungsoperation integriert. Die Kommunikation zu den Operatoren bzw. zu den Bedienpersonen wird bspw. über einen an der Losbox befestigten Funk-Transponder mit bistabilem Display durchgeführt.

Wie weiter unten noch näher ausgeführt, besteht das System z.B. aus den folgenden Komponenten:
- Kennzeichnungseinheit bzw. DisTag (Distance Transponder, Distance Tag) als aktiver Funk-Transponder mit integriertem Ultraschallempfänger zur Feinlokalisierung und bistabilem Display zur Datenanzeige,
- Antennenmodule, die flächendeckend und modular sind und RF-Antennen und Ultraschallsender sowie integrierte Steuerungsgerät enthalten,
- Datenverarbeitungsanlage bzw. Boxen-Tracking-Server zur Steuerung der flächendeckenden Lokalisierung und dynamischen, den Transportweg nachvollziehenden, Kommunikation mit dem DisTag zur Informationsausgabe der Transportleit- und Fertigungsinformation.

Auf Grund der flächendeckenden genauen Erfassung der Ortspositionen der Waferboxen sowie der zu jedem Zeitpunkt möglichen Kommunikation mittels Hand-Over-Prinzip innerhalb der Fertigungshalle bietet die Lösung insbesondere folgende Vorteile:
- flächendeckende genaue Lokalisierung mit einer Genauigkeit bis auf wenige Zentimeter,
- Ausgabe der Fertigungs- und Transportleitinformation jederzeit dezentral am Ort des Geschehens, d.h. z.B. an der Losbox (paperless fab),
- Ausgabe einer dynamischen Statusinformation, z.B. Reservierung, Losmeldung oder Eillos, die Handlingsprozesse unterstützt, da die Information direkt an der Losbox selbst angezeigt wird (paperless fab),
- durch Minimierung von Such-, Transport- und Lagervorgängen der Losboxen sowie der darauf beruhenden Optimierung der Kapazitätsauslastung der Fertigungsmaschinen kann die Durchlaufzeit der Fertigung verkürzt werden,
- Auf Grund der hohen Reichweite der RF- und Ultraschalltechnologie wird eine flächendeckende Lokalisierungsfunktion bei stark reduziertem Installationsaufwand möglich.

Im folgenden wird die Erfindung an Hand der beiliegenden Figuren erläutert. Darin zeigen:
- Figur 1: die Aufteilung einer Hallenfläche nach dem Linien- konzept unter Berücksichtigung einer Clusterbedin- gung,
- Figur 2: einen ein Gerät bildenden Abschnitt einer Ortungs- anordnung,
- Figur 3: Bestandteile einer Ansteuer- und Auswerteeinheit,
- Figur 4: eine Kennzeicheneinheit, deren Ort bestimmt werden soll,
- Figur 5: das trigonometrische Grundprinzip zur Ermittlung der Linienposition, und
- Figur 6: Verfahrensschritte zur Berechnung der Position der Kennzeicheneinheit.

Obwohl die Erfindung im Folgenden an Hand eines Losverfolgungssystems bzw. eines LotTracking-Systems in einer Halbleiterfertigung erläutert wird, wird die Erfindung auch in anderen Bereichen eingesetzt, bspw. im Maschinenbau oder in Bibliotheken. Obwohl im Folgenden auf gerade Gänge Bezug genommen wird, wird die Erfindung auch bei stückweise linearen Wegabschnitten eingesetzt.

Die Kombination von Funk- und Ultraschalltechnologie löst den Widerspruch zwischen effizienter Kommunikation und genauer Lokalisierung auf, d.h. die Performance sowohl der Kommunikation als auch der Lokalisierung sind sehr hoch. Bei der Verwendung von Ultraschall (US) besteht die Herausforderung darin, die zeitkritische Verarbeitung der Ultraschallsignale möglichst nicht ins Gewicht fallen zu lassen. Die Schallgeschwindigkeit beträgt etwa 340 m/s im Gegensatz zur Lichtgeschwindigkeit, mit der sich Funkstrahlen ausbreiten. Für die Ermittlung einer analogen Ortsinformation per Ultraschall muss sichergestellt werden, dass ein US-Empfänger in einem DisTag nicht gleichzeitig zwei US-Signale empfängt, deren Herkunft nicht unterschieden werden kann. Daraus folgt dass gemäß einer Antikollisionsbedingung US-Sender nicht gleichzeitig senden dürfen, die:
- innerhalb eines bestimmten Nachbarschaftsbereiches liegen, dessen Ausdehnung maßgeblich durch die Reichweite des Ultraschallsenders und durch die Empfangssensibilität der US-Empfänger über dem Winkel bestimmt wird, und
- die innerhalb einer bestimmten Zeit senden, die durch eine vorgegeben Höchstzeit bis zum Eintreffen eines US-Signals bestimmt wird.

So ist zu vermeiden, dass innerhalb dieser Zeitschranke zwei US-Signale empfangen werden und eine Zuordnung des Signals zu einem bestimmten US-Sender nicht möglich ist. Bei einer Performanceanforderung von z.B. "alle 30 Sekunden Aktualisierung der Ortspositionen aller Losboxen" müssen mehrere Ultraschallsender gleichzeitig angesteuert werden, ohne dass die Signale miteinander kollidieren. Dies wird erreicht, indem alle gleichzeitig angesteuerten US-Sender einem gemeinsamen Cluster zugeordnet werden. Das Verfahren beruht darauf, dass eine minimale geometrische Entfernung zwischen den gleichzeitig sendenden US-Sendern eines Clusters gegeben ist. Diese Bedingung wird im Folgenden auch als Clusterbedingung bezeichnet. Die optimale Auslegung der Clusterbedingung, d.h. der gewählte Abstand zwischen zwei US-Sendern eines Clusters wird bestimmt durch die Antikollisionsbedingung und die Güte der Groblokalisierung durch Funk, weil der DisTag bzw. US-Empfänger eine empfangene Laufzeit nur pauschal allen Antennen eines Clusters zuordnen kann. Die Zuordnung zu einem Gebiet bei der Grobortung erfolgt bspw. über die Kenntnis der Position der Funkantenne mit dem stärksten Empfangspegel eines Signals, dass von dem zu ortenden DisTag kommt.

Zudem ist zu beachten, dass die Anzahl der in 30 Sekunden nacheinander sendenden US-Sender klein sein muss, da ansonsten im bspw. synchronen Kommunikationsprotokoll zu wenig "Funk-Zeit" zur Verfügung steht für:
- die Rückmeldung der Laufzeiten und der Identifikationsnummern durch die DisTags, und
- die Kommunikation zwischen einer unten näher erläuterten Anschlusseinheit und den DisTags.

Im Ausführungsbeispiel beträgt die Zeit für die Aussendung der US-Signale inklusive anschließender Laufzeitmessung nur ein Viertel eines Zyklus.

Diese Restriktionen haben zur Folge, dass nicht alle US-Sender über die zeitliche Position ihrer Abstrahlung von Ultraschall im Kommunikationsprotokoll unterschieden werden können. Damit ist eine absolute Lokalisierung allein auf der Basis von US-Laufzeiten nicht möglich. Deshalb wird eine Groblokalisierung mittels Funk-Feldstärkenmessung durchgeführt, d.h. einer absoluten Koordinate, und die Feinlokalisierung wird über die Laufzeitmessung mittels Ultraschall durchgeführt, d.h. Ermittlung einer relativen Koordinate.

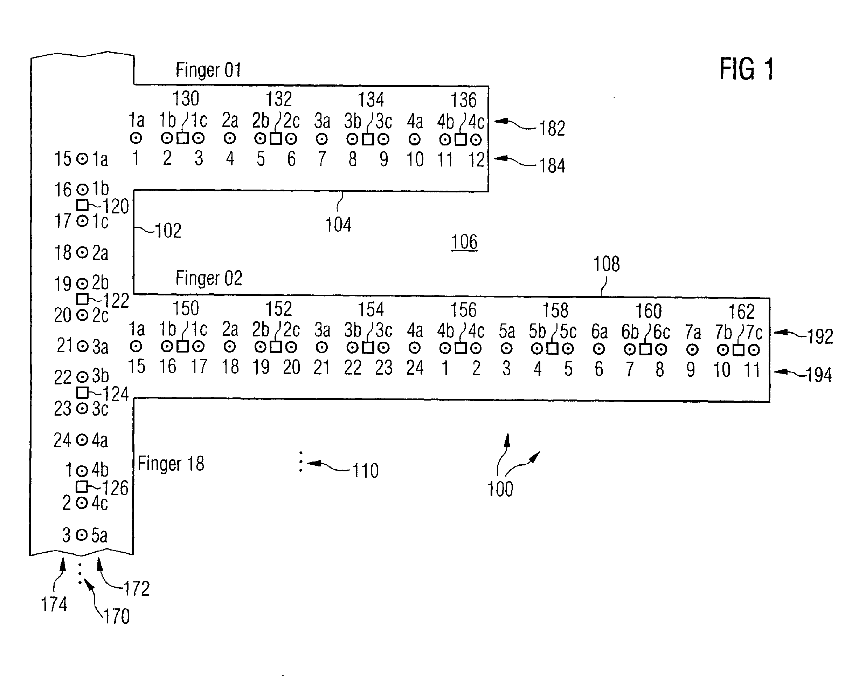

Figur 1 zeigt die Aufteilung einer Hallenfläche einer Werkhalle 100 nach dem Linienkonzept unter Berücksichtigung einer Clusterbedingung. Die Werkhalle 100 ist nach dem Linienkonzept in einen Hauptgang 102 und in Quergänge 104, 108 sowie in weitere durch Punkte angedeutete Quergänge 110 eingeteilt. Auf Grund der maximal verfügbaren Zeit für eine Lokalisierung, die im Ausführungsbeispiel 30 Sekunden beträgt, und der Bedingung, dass alle Ultraschallsender aus Redundanzgründen dreimal in einem Zyklus geschaltet werden müssen, ergibt sich eine maximale Clusteranzahl von 36.

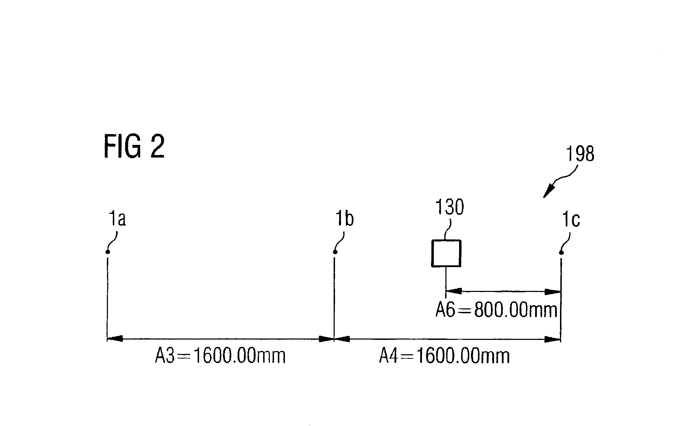

Pro Funkantenne 120 bis 162 sind jeweils drei Ultraschallsender a, b bzw. c zusammengefasst, wobei benachbarte Ultraschallsender 1a bis 7b jeweils einen Abstand von 1,6 Metern haben, wie unten an Hand der Figur 2 noch näher erläutert wird. Mit diesen Voraussetzungen können je Zyklus maximal 12 Funkantennen mit jeweils drei Ultraschallsendern dreimal in einem Gang durchgeschaltet werden. Durch die Verwendung von Clustern 1 bis 24 lassen sich jedoch die Ultraschallsender des gleichen Clusters gleichzeitig schalten. Eine Funkantenne 120 bis 162 und drei Ultraschallantennen bzw. Ultraschallsender 1a bis 7b werden nachfolgend als ein Gerät bezeichnet.

Der Hauptgang 102 wird als Finger "18" nummeriert. Der Quergang 104 wird als Finger "01" nummeriert. Der Quergang 104 wird als Finger "02" nummeriert usw. Dadurch lassen sich Kennzeichen zur Bezeichnung einer Ultraschallantenne bilden, z.B. das Kennzeichen:
013a,
zur Bezeichnung des ersten Ultraschallsenders a im dritten Gerät des Querganges 104.

Im Ausführungsbeispiel haben der Hauptgang 102 und die Quergänge 104, 106, 110 alle eine Breite von bspw. 2,80 Metern der Hauptgang 102 hat ein Länge von 38 Metern. Der Quergang 104 hat eine Länge von 19,2 Metern, der Quergang 108 hat eine Länge von 33 Metern.

Im Hauptgang 102 sind die Geräte mit den Funkantennen 120 bis 126 sowie weitere nicht dargestellte Geräte 170 angeordnet. In einer Zeile 172 sind die Ultraschallsender bezeichnet, beginnend mit 1a, 1b, 1c, 2a, 2b usw. Eine Zeile 174 dient der Darstellung von Zahlen, die die Clusterzugehörigkeit der Ultraschallsender im Hauptgang 102 angeben. So gehört der Ultraschallsender 1a zum Cluster 15, der Ultraschallsensor 1b zum Cluster 16 usw. Es werden von den maximal 36 möglichen Clustern nur 24 verwendet, so dass im Hauptgang 102 der Ultraschallsender 4b zum Cluster 1, der Ultraschallsender 4c zum Cluster 2 usw. gehört.

Der Quergang 108, zweigt vom Hauptgang 102 am Ultraschallsender 1a des Hauptganges 102 ab. Der erste Ultraschallsender 1a im Quergang 104 ist dem Cluster 1 zugeordnet, so dass Beeinflussungen der Ultraschallsignale verschiedener Gänge auf Grund des Versatzes beim Aussenden der Ultraschallimpulse gering sind. Ebenso ist der erste Ultraschallsensor 1a des Querganges 108 einem anderen Cluster, nämlich dem Cluster 15, zugeordnet als die diesem Ultraschallsender 1a nächstliegenden Ultraschallsender 2c, 3a,3b des Hauptganges 102, die dem Cluster 20, 21 bzw. 22 zugeordnet sind. Die Ultraschallsender der Cluster 1 bis 24 werden in aufsteigender Reihenfolge angesteuert.

Im Quergang 104 sind die Geräte mit den Funkantennen 130 bis 136 angeordnet. In einer Zeile 182 sind die Ultraschallsender bezeichnet, beginnend mit 1a, 1b, 1c, 2a, 2b usw. bis 4c. Eine Zeile 184 dient der Darstellung von Zahlen, die die Clusterzugehörigkeit der Ultraschallsender im Hauptgang 102 angeben. So gehört der Ultraschallsender 1a zum Cluster 1, der Ultraschallsensor 1b zum Cluster 2 usw.

Im Quergang 108 sind die Geräte mit den Funkantennen 150 bis 162 angeordnet. In einer Zeile 192 sind die Ultraschallsender bezeichnet, beginnend mit 1a, 1b, 1c, 2a, 2b usw. bis 7b. Eine Zeile 194 dient der Darstellung von Zahlen, die die Clusterzugehörigkeit der Ultraschallsender im Hauptgang 102 angeben. So gehört der Ultraschallsender 1a zum Cluster 15, der Ultraschallsensor 1b zum Cluster 16 usw. Es werden von den maximal 36 möglichen Clustern nur 24 verwendet, so dass im Quergang 108 der Ultraschallsender 4b zum Cluster 1, der Ultraschallsender 4c zum Cluster 2 usw. gehört.

Auch zwischen den Quergängen 104 und 108 wird mit einem Clusterversatz gearbeitet, um Störungen der Ultraschallmessungen zu vermeiden. Der Versatz beträgt zehn Cluster, so dass bei einer Parallelverschiebung eines Ganges auf den anderen Gang immer neun Ultraschallsender eines Ganges zwischen den jeweils gleichzeitig sendenden Ultraschallsendern eines Clusters liegen.

Figur 2 zeigt eine das Gerät mit der Funkantenne 130 bildende Ortungsanordnung 198 stellvertretend für die Anordnung der untereinander gleich aufgebauten Geräte 120 bis 162, 170, 180 und 190. Die Geräte eines Ganges sind nacheinander entlang einer Geraden angeordnet. Bei dem Ausführungsbeispiel werden die Geräte an eine Decke oder eine Wand montiert.

Zwischen dem Ultraschallsender 1a und dem Ultraschallsender 1b liegt ein Abstand A3 von 1,6 Metern. Ebenso liegt zwischen dem Ultraschallsender 1b und dem Ultraschallsender 1c ein Abstand A4 von 1,6 Metern. Die Funkantenne 130 ist in einem Abstand A6 von 0,8 Metern vom Ultraschallsender 1c angeordnet und liegt somit genau in der Mitte zwischen den Ultraschallsendern 1b und 1c. Die Funkantenne 132 des benachbarten Gerätes hat einen Abstand von 4,8 Metern zur Funkantenne 130.

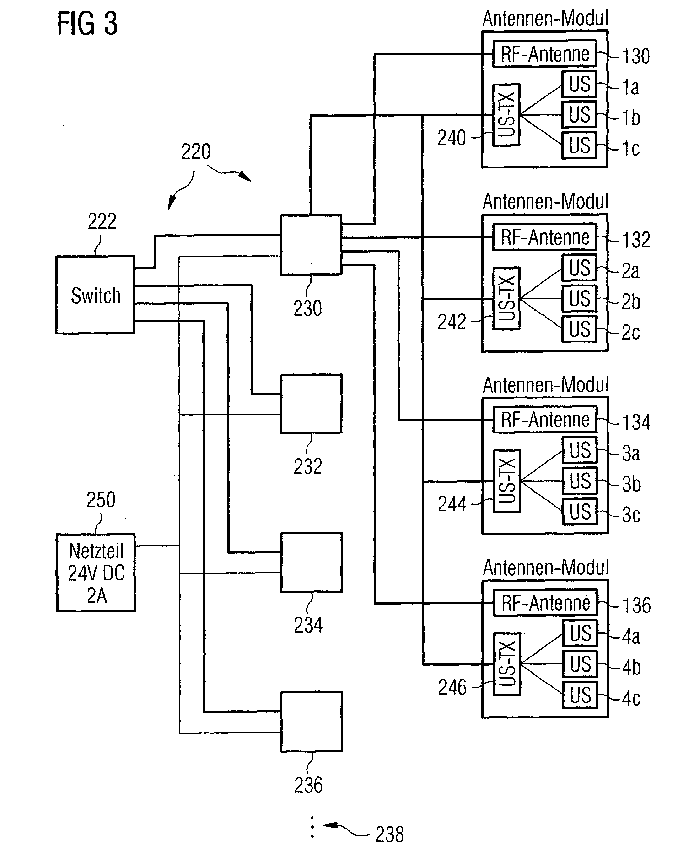

Figur 3 zeigt Bestandteile einer Ansteuer- und Auswerteeinheit 220, die neben einer nicht dargestellten Datenverarbeitungsanlage, z.B. basierend auf dem Betriebssystem Windows 2000, die folgenden Komponenten enthält:
- einen sogenannten Switch 222 eines Datenübertragungsnetzes, an dem auch die Datenverarbeitungsanlage betrieben wird,
- mehrere an den Switch 222 angeschlossene Anschlusseinheiten, von denen in Figur 3 vier Anschlusseinheiten 230 bis 236 dargestellt sind. Weitere an den Switch 236 angeschlossene Anschlusseinheiten 238 sind durch Punkte angedeutet.
- mehrere Geräte bzw. Antennemodule mit jeweils einer Funkantenne 130 bis 136 und jeweils drei Ultraschallsendern, wobei jeweils vier Geräte an einer Anschlusseinheit 230 bis 238 angeschlossen sind. - in jeweils einem Gerät bzw. Antennemodul enthaltene Ansteuereinheiten 240 bis 246, die jeweils die drei Ultraschallsender eines Gerätes ansteuern, z.B. die Ansteuereinheit 240 des Gerätes mit der Funkantenne 130 die Ultraschallsender 1a, 1b und 1c.
- ein Netzteil 240 zur Stromversorgung der Anschlusseinheiten 230 bis 238 und der Ansteuereinheiten 240 bis 246.

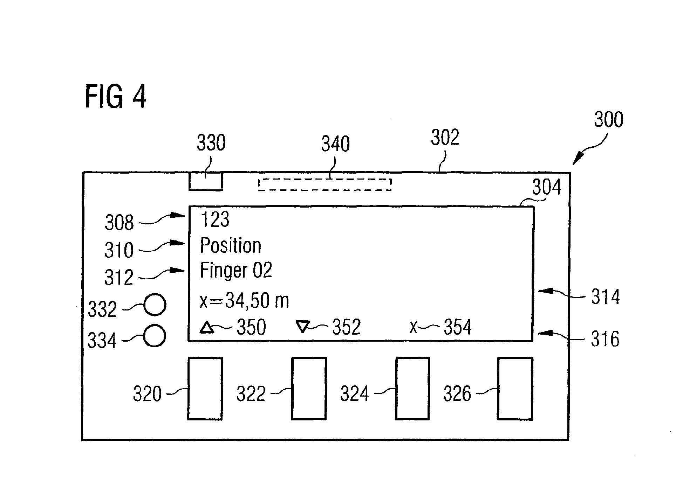

Figur 4 zeigt eine Kennzeicheneinheit 300 bzw. ein DisTag mit einem Gehäuse 302, an dem ein Display 304 zur Darstellung von fünf Zeilen 308 bis 316 alphanumerischem Text angebracht ist. Die Kennzeicheneinheit 300 enthält außerdem noch vier Bedientasten 320 bis 326, die bspw. als Menüauswahltasten arbeiten.

Weiterhin enthält die Kennzeicheneinheit 300 einen Ultraschallempfänger 330 mit dessen Hilfe die Laufzeitmessung durchgeführt wird. Zwei Leuchtdioden 332 und 334 dienen der Kennzeichnung von gesuchten Losboxen bzw. der Kennzeichnung von Eillosen. Die Kennzeicheneinheit enthält außerdem eine Sende-/Empfangs-Antenne 340 zur Kommunikation mit den Funkantennen 120 bis 162. Die Kennzeicheneinheit 300 wird von einer internen Batterie, einem Akku und ggf. von einer Solarzelle gespeist. Im Innern der Kennzeicheneinheit 300 befindet sich eine Schaltung, welche die Funktionen der Kennzeicheneinheit erbringt, insbesondere:
- die Laufzeitmessung, einschließlich einer Synchronisation,
- das Senden der Ergebnisse der Laufzeitmessung,
- den Empfang von Nachrichten, die auf dem Display 304 dargestellt werden.

In Figur 4 ist in der linken oberen Ecke des Displays 304 bzw. in der Zeile 308 das Kennzeichen der Kennzeicheneinheit 300 angezeigt. Im Ausführungsbeispiel wird das Kennzeichen "123" angezeigt, das bspw. mit einer Losnummer übereinstimmt.

Im Display 304, Zeile 310, ist in der aktuellen Menüauswahl das Wort "Position" dargestellt. Zeile 312 enthält den Text "Finger 02", d.h. die Angabe des Fingers bzw. Querganges 108, in dem sich die Kennzeichnungseinheit 300 gerade befindet.

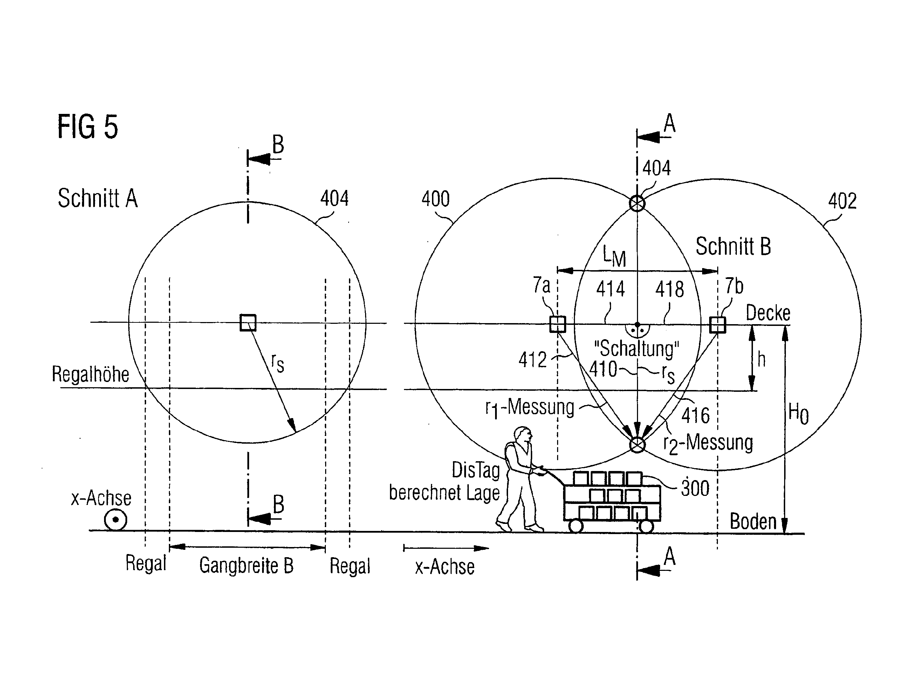

In der vierten Zeile 314 wird der Text "x=34,50 m" angezeigt, weil eine Entfernung von 34,50 Metern von der Kennzeicheneinheit 300 bis zum Anfang des Querganges 108 ermittelt worden ist. Die fünfte Zeile 316 dient der Anzeige von Steuersymbolen 350 bis 354 zur Bedienung der. Kennzeicheneinheit 300. Figur 5 zeigt das trigonometrische Grundprinzip zur Ermittlung der Linienposition. Um mit dem LotTracking-System eine maximale Performance, d.h. eine maximale Kommunikationsrate und gleichzeitig eine genaue Lokalisierung, zu erzielen, muss die US-Senderdichte, d.h. die Anzahl von US-Sendern pro Flächeneinheit so weit wie möglich reduziert werden. Aus diesem Grund wird eine kolineare Anordnung der US-Sender in Längsrichtung der Finger/Gänge 104, 106, 108 vorgenommen, bei der nur die Position in Längsrichtung des Fingers/ Ganges 104, 106, 108 genau und eindeutig angegeben wird.

Durch den Schnitt zweier Kugeln 400 und 402, deren Radius sich aus der US-Laufzeit zwischen einem US-Sender 7a bzw. der Kennzeichnungseinheit 300 sowie zwischen einem weiteren US-Sender 7b und der Kennzeichnungseinheit 300 errechnet, erhält man einen Ring 404, der senkrecht zur Finger- bzw. Ganglängsachse steht. Aus jeder Laufzeit wird über die Formel: Laufzeit * US-Geschwindigkeit = Entfernung die Entfernung von dem jeweiligen Sender ermittelt. Bei 21 Grad Celsius beträgt die Laufzeit 343,96 m/s (Meter pro Sekunde).

Die US-Sender sind bspw. benachbarte US-Sender oder nur durch einen dazwischenliegenden Ultraschallsender getrennte Sender, bspw. die US-Sender 7a und 7b im Quergang 108, d.h. im Finger "02". Die Kugeln 400, 402 haben im Ausführungsbeispiel den gleichen Radius r1, r2, wie sich die Kennzeichneinheit gerade genau in der Hälfte zwischen den US-Sendern 7a und 7b befindet. An anderen Positionen haben die Kugeln 400, 402voneinander verschiedene Radien. Die folgenden geometrischen Überlegungen gelten jedoch für alle Kugelradien r1, r2. Für die Berechnung der genauen Position einer Kennzeicheneinheit 300 genügen daher mit dem "Linienkonzept" grundsätzlich zwei US-Laufzeiten.

Die US-Sender sind in der Mitte des Quergangs 108 parallel zur Gangrichtung in einem festen Abstand L von jeweils 1,6 Metern angeordnet. Liegen für einen DisTag 300 zwei Laufzeitmessungen von zwei US-Sendern mit definiertem Abstand LM vor, wobei gilt LM = L * n mit n als natürlicher Zahl, so kann die Position des DisTags 300 im Quergang 108 durch Aufstellung des Satzes des Pythagoras für die rechtwinkligen Dreiecke aus den Strecken 410, 412 (Entfernung zwischen DisTag 300 und dem Sender 7a ermittelt aus der Laufzeit des vom Sender 7a kommenden Ultraschallimpulses) und 414 sowie den Strecken 410, 416 (Entfernung zwischen DisTag 300 und dem Sender 7b ermittelt aus der Laufzeit des vom Sender 7b kommenden Ultraschallimpulses) und 418 berechnet werden. Die Strecke 414 bezeichnet den x-Abstand zum Sender 7a. Die Strecke 418 bezeichnet den x-Abstand zum Sender 7b.

Die Strecken 414 und 418 hängen über den Abstand LM und die Position x voneinander ab, wobei in Figur 5 für die Länge der Strecke 414 gleich x gilt:
Länge der Strecke 414 = LM - x. Die Länge der Strecke 410 muss nicht ermittelt werden. Damit lässt sich die Position x aus den angegebenen Zusammenhängen berechnen. Die Berechnung ist unabhängig von der y-Position (seitlich quer zur Längsachse) bzw. der z-Position (Höhe) der Kennzeicheneinheit 300 im Quergang 108.

Fehler bei der Ermittlung der Positionen lassen sich vermeiden, wenn für eine Kennzeicheneinheit pro Zyklus mehrmals der Ort berechnet wird. Erst bei Übereinstimmung der ermittelten Orte für eine Kennzeichnungseinheit liegt ein gültiger Wert fest. Bspw. wird der 30 Sekunden Hauptzyklus deshalb noch einmal in drei Subzyklen von jeweils 10 Sekunden unterteilt. Durch diese Vorgehensweise lassen sich gerade bewegte Kennzeichnungseinheiten 300 bis zum Ende der Bewegung von der Ortung ausnehmen. Auch Reflexionen und andere Störquellen beeinflussen so die Ergebnisse weniger.

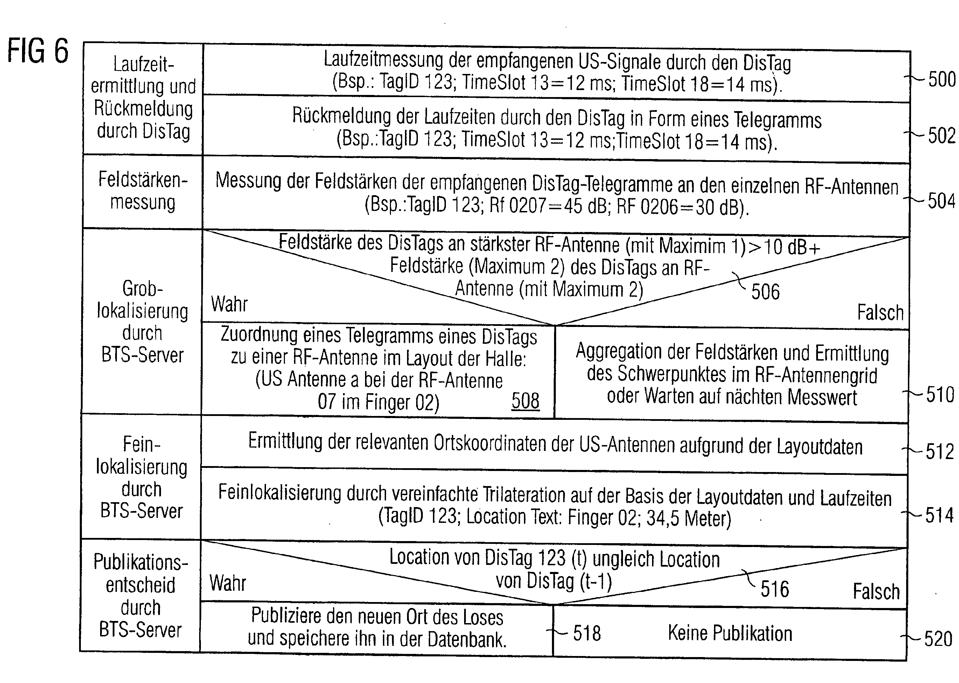

Figur 6 zeigt Verfahrensschritte zur Berechnung der Position der Kennzeicheneinheit. In Verfahrensschritten 500 und 502 wird die Laufzeit durch eine Kennzeichnungseinheit ermittelt und an die zentrale Datenverarbeitungsanlage über die Funkantennen 120 bis 162 gemeldet. In dem Verfahrensschritt 500 wird die Laufzeit der empfangenen US-Signale durch den DisTag ermittelt, bspw. durch den DisTag 300 mit der ID (Identifier) 123 im Zeitschlitz 13 eine Laufzeit 12 ms und im Zeitschlitz 18 eine Laufzeit von 14 ms. Der Zeitschlitz 13 betrifft bspw. den US-Sender 7a und der Zeitschlitz 18 den US-Sender 7b im Quergang 108. Im Verfahrensschritt 502 werden die ermittelten Laufzeiten in Form eines Telegramms über Funk zur Datenverarbeitungsanlage gesendet.

In einem folgenden Verfahrensschritt 504 werden die Feldstärken durch die Anschlusseinheiten 230 bis 238 ermittelt. Beispielsweise empfängt die Funkantenne 162 bzw. mit der oben eingeführten Nomenklatur die Antenne RF 0207 ein Empfangssignal von dem DisTag 300 mit einem Pegel von 45 dB. Die Antenne mit dem zweitstärksten Empfangspegel ist im Ausführungsbeispiel die Antenne 160, d.h. die Antenne RF 0206, mit einem Empfangspegel von 30 dB.

Anschließend wird in Verfahrensschritten 506 bis 510 eine Groblokalisierung durch die Datenverarbeitungsanlage durchgeführt, die auch als BTS-Server (Boxen Tracking Server) bezeichnet wird. Im Verfahrensschritt 506 wird geprüft, ob die Feldstärke des stärksten Empfangspegels die Feldstärke des zweitstärksten Empfangspegels um 10 dB überschreitet. Ist dies der Fall, so folgt dem Verfahrensschritt 506 unmittelbar der Verfahrensschritt 508, in welchem ein Telegramm eines DisTags einer RF-Antenne im Layout der Werkhalle zugerordnet wird. Im Ausführungsbeispiel wird das Telegramm des DisTags 300 dem US-Sender a bei der RF-Antenne 7 bzw. 162 im Finger bzw. Quergang 108 zugeordnet.

Wird dagegen im Verfahrensschritt 506 festgestellt, dass die Pegelbedingung nicht erfüllt ist, so wird ein anderes Lokalisationsverfahren eingesetzt oder es wird auf den nächsten Empfang eines Telegramms vom betreffenden DisTag gewartet.

In den folgenden Verfahrensschritten 512 und 514 wird die Feinlokalisierung durch den BTS-Server durchgeführt. Im Verfahrensschritt 512 ermittelt der BTS-Server die Antenne 162 auf Grund der Layoutdaten der Werkhalle 100, siehe Figur 1. Im folgenden Verfahrensschritt 514 führt der BTS-Server die an Hand der Figur 5 erläuterten Berechnungen durch. Beim Berechnen wird an Stelle einer Trilateration das einfachere Verfahren mit nur zwei Laufzeiten durchgeführt. Es wird der Ortungstext "Finger 02; x=34,5 m" vom BTS-Server erstellt.

Dann werden Verfahrensschritte 516 bis 520 durchgeführt, in denen eine Publikationsentscheidung durch den BTS-Server getroffen wird. Im Verfahrensschritt 516 wird geprüft, ob sich die Position des DisTags 300 seit dem letzten Zyklus verändert hat. Ist dies der Fall, so wird die Position im Verfahrensschritt 518 in einer Datenbank aktualisiert und der Ortungstext wird zum DisTag 300 gesendet. Ist die Position dagegen gleich geblieben, so folgt nach dem Verfahrensschritt 516 unmittelbar der Verfahrensschritt 520, in welchem eine Aktualisierung der Datenbank und eine Publikation des Ortungstextes unterbleibt.

Die Kommunikation der Laufzeiten von bspw. von bis zu 2000 DisTags wird bspw. nach dem bekannten slottet ALOHA-Verfahren durchgeführt. Bspw. werden 100 Zeitschlitze eines Zyklus in jeweils 20 Subzeitschlitze unterteilt. Jeder DisTag sendet in einem zufällig ermittelten Zeitschlitz, so dass auf Grund der sich ergebenden Gleichverteilung trotz gleich aufgebauter und gleich arbeitender DisTags der überwiegende Teil der DisTags die ermittelten Laufzeiten übertragen kann. Durch die oben erwähnte Redundanz lassen sich fehlende Meldungen vermeiden. Alternativ wird aber auch ein Verfahren eingesetzt, bei dem jedem DisTag ein eigener Subzeitschlitz zugeordnet wird.

### Bezugszeichenliste

- 1 bis 10: Cluster
- 1a bis 7c: Ultraschallsender
- 01 bis 18: Finger
- 100: Werkhalle
- 102: Hauptgang
- 104: Quergang
- 106: Wartungsgang
- 108: Quergang
- 110: Quergänge
- 120 bis 160: Funkantenne
- 170: Geräte
- 172 bis 194: Zeile
- 198: Ortungsanordnung
- A3 bis A6: Abstand
- 220: Auswerteeinheit
- 222: Switch
- 230 bis 238: Anschlusseinheit
- 240 bis 246: Ansteuereinheit
- 250: Netzteil
- 300: Kennzeicheneinheit
- 302: Gehäuse
- 304: Display
- 308 bis 314: Zeile
- 320 bis 326: Bedientaste
- 330: US-Empfänger
- 332, 334: Leuchtdiode
- 340: Antenne
- 350 bis 354: Steuerungssymbol
- 400, 402: Kugel
- 404: Ring
- LM: Abstand
- 410 bis 418: Strecke
- 500 bis 520: Verfahrensschritte
- r1, r2: Radius

## Patentansprüche

1. Kennzeicheneinheit (300),
mit einer Speichereinheit, in der ein Kennzeichen gespeichert ist, dass die Kennzeicheneinheit (300) von anderen gleich aufgebauten Kennzeicheneinheiten (300) unterscheidet,
mit einem Ultraschallempfänger (330),
mit einem Strahlungssender (340),
mit einem Strahlungsempfänger (340),
und mit einer Steuereinheit, die abhängig von einem mit dem Strahlungsempfänger (340) empfangenen Synchronisationssignal eine Ultraschalllaufzeitmessung durchführt und das Ergebnis mit Hilfe des Strahlungssenders (340) sendet,
**gekennzeichnet durch** mindestens eine Leuchteinheit (332, 334) oder eine optische Signalgebereinheit, die über den Strahlungsempfänger (340) angesteuert werden kann.

2. Kennzeicheneinheit (300) nach Anspruch 1, **gekennzeichnet durch** eine bistabile Zeichen-Anzeigeeinheit (304), die den darzustellenden Inhalt auch nach einem Abschalten der Betriebsspannung anzeigt.

## Claims

1. Identification unit (300), comprising:
a memory unit, in which is stored an identification which distinguishes the identification unit (300) from other identically constructed identification units (300),
an ultrasonic receiver (330),
a radiation transmitter (340),
a radiation receiver (340),
and a control unit, which carries out an ultrasound propagation time measurement depending on a synchronization signal received by the radiation receiver (340) and transmits the result with the aid of the radiation transmitter (340),
**characterized by** at least one luminous unit (332, 334) or an optical signaling unit that can be driven via the radiation receiver (340).

2. Locating arrangement according to Claim 1, the identification unit being **characterized by** a bistable character display unit (304), which displays the content to be represented even after the operating voltage has been switched off.

## Revendications

1. Unité (300) de caractérisation,
comprenant une unité de mémorisation, dans laquelle est mémorisée une caractéristique, en ce que l'unité (300) de caractérisation se distingue d'autres unités (300) de caractérisation constituées de la même façon,
comprenant un récepteur (300) d'ultrasons,
comprenant un émetteur (340) de rayonnement,
comprenant un récepteur (340) de rayonnement,
et comprenant une unité de commande qui, en fonction d'un signal de synchronisation reçu par le récepteur (340) de rayonnement, effectue une mesure du temps de parcours des ultrasons et envoie le résultat à l'aide de l'émetteur (340) de rayonnement,
**caractérisée par** au moins une unité (332, 334) d'éclairage ou une unité donnant un signal visuel, qui peut être commandée par le récepteur (340) de rayonnement.

2. Unité (300) de caractérisation suivant la revendication 1, **caractérisée par** une unité (304) bistable d'affichage de signe, qui affiche le contenu à représenter même après une interruption de la tension de service.
